# EUROPÄISCHE PATENTSCHRIFT

(11) **EP 0 728 784 B1**
(45) Veröffentlichungstag und Bekanntmachung des Hinweises auf die Patenterteilung: **12.07.2000**
(21) Anmeldenummer: 96102128.4
(22) Anmeldetag: 14.02.1996
(51) Int. Cl.: C08G 18/68, C08G 18/08, C09D 175/14

(54) **Verfahren zur Herstellung von Polyurethan-Dispersionen und deren Verwendung als Bindemittel**
Process for the preparation of dispersions of polyurethanes and their use as binders
Procédé de la préparation de dispersions de polyuréthanes et leur utilisation comme liants

(30) Priorität: 27.02.1995 DE 19506737
(43) Veröffentlichungstag der Anmeldung: 28.08.1996
(73) Patentinhaber: WOLFF WALSRODE AG, 29655 Walsrode (DE)
(72) Erfinder: Dannhorn, Wolfgang, Dr., D-29664 Walsrode (DE); Hecht, Reinhold, Dr., D-29683 Fallingbostel (DE); Hoppe, Lutz, Dr., D-29664 Walsrode (DE); Luehmann, Erhard, Dipl.-Ing., D-29699 Bomlitz (DE)
(74) Vertreter: Feldhues, Michael L.F., Dr.

(56) Entgegenhaltungen:
- EP-A- 0 021 078
- EP-A- 0 073 517
- EP-A- 0 451 590
- US-A- 3 577 389
- CHEMICAL ABSTRACTS, vol. 86, no. 18, 2.Mai 1977 Columbus, Ohio, US; abstract no. 123016t, M.F. SOROKIN ET AL.: "Water-thinnable oil-free polyester urethanes based on alpha-monoallyl ether of glycerol, polycarboxylic acids, and isocyanates" Seite 89; XP002005339 & DEPOSITED DOC., Bd. VINITI 3118-74, 1974,

## Beschreibung

Die Herstellung von wäßrigen Polyurethan-Dispersionen werden in der EP-75 775, DE-OS 3 417 265, DE-OS 3 516 806, DE-OS 3 613 492, DE-OS 3 603 996, US-4 992 507, CA-1 224 586, "Methoden der Organischen Chemie", Houben-Weyl, 4. Auflage, Band E20/Teil 2, S. 1662, Georg Thieme Verlag, Stuttgart, 1987 und in der "Angewandten Chemie", D. Dieterich, 82, 53 (1970) beschrieben. Um nun Polyurethan-Lacküberzüge mit hohem Eigenschaftsniveau, wie Chemikalienbeständigkeit und mechanische Stabilität, zu erhalten, müssen die Beschichtungen nach Verdunsten des Wassers noch bei höheren Temperaturen getempert werden. Dabei reagieren die mit flüchtigen Aminen neutralisierten Carboxylgruppen zu Säureamiden. Eine andere Methode besteht darin, daß man den Polyurethan-Dispersionen Aminoplast-Harze zusetzt, mit denen dann die Endvernetzung erfolgt. Die Aushärtung bei höheren Temperaturen - diesen Vorgang bezeichnet man als Einbrennen - ist dann geeignet, wenn es sich um temperaturbeständige Substrate handelt. Nicht bzw. nur bedingt geeignet ist diese Methode zum Beschichten von Holz, Papier oder Leder.

Für die Lackierung zuletzt genannter Substrate eignen sich Polyurethan-Dispersionen, die strahlenvernetzbar sind. So wird in der EP-554 784 und in der DE-3 437 918 die Herstellung von strahlenhärtbharen Polyurethan-Dispersionen, basierend auf Acryloyl- bzw. Methacryloylgruppen, beschrieben. Nach Verdunsten des Wassers erhält man allerdings Überzüge, die vor der Strahlenhärtung noch nicht mechanisch belastbar sind bzw. eine klebrige Oberfläche bilden.

Wunsch der Lackverarbeiter ist es aber, nach Verdunsten des Wassers klebfreie, mechanisch beanspruchbare Oberflächen zu erhalten, weil dann die Anfälligkeit gegenüber Staubpartikel, die einfach abgewischt werden können, ausgeschlossen ist und lackierte Gegenstände stapelbar sind, wodurch eine gute Raumausnutzung erreicht wird. Bei der Applikation auf komplizierten Flächen, wie Stühlen, kann es Bereiche geben, die bei der strahlenchemischen Aushärtung nicht vollständig erfaßt werden. Für solche Einsatzgebiete werden Dispersionen, die klebfreie und mechanisch beanspruchbare Beschichtungen ergeben, ebenfalls gefordert. Die Polyurethan-Dispersionen der oben zitierten Patentschriften sind daher ungeeignet. Weiterhin ist die Reparaturfähigkeit dieser Dispersionen sehr schlecht, da die Oberflächen im ungehärteten Zustand kleben, sich daher nicht schleifen lassen, und ausgehärtet die Haftung der neuen Beschichtung, wie der Lackspezialist weiß, unzureichend ist.

Physikalisch trocknende Polyurethanacrylat-Dispersionen werden in der EP-209 684 beschrieben. Allerdings reicht die mechanische Beanspruchbarkeit der mit diesen Dispersionen erhaltenen Oberflächen nach Verdunsten des Wassers nicht aus, um die vom Fachmann erwünschten Anforderungen zu erfüllen. Der Nachteil von Polyurethanacrylaten ist ganz allgemein darin zu sehen, daß die Gefahr der thermischen Aktivierung der Acryloyl- und Methacryloyl-Doppelbindungen unter vorzeitiger Polymerisation auch bei Verwendung von Lösungsmitteln, Katalysatoren und Inhibitoren bei erhöhten Temperaturen gegeben ist. Das Verfahren ist daher als problematisch anzusehen.

Alternativ zu thermolabilen Acryloyl- bzw. Methacryloyl-Doppelbindungen können in Polyurethan-Präpolymeren thermisch weitaus stabilere allylische Doppelbindungen eingebaut werden. Beispiele hierfür sind in der CA-2 040 280 angegeben. Nach dem Verdunsten des Wassers erhält man klebfreie Filme, die aber durch ein thermoplastisches Verhalten gekennzeichnet sind. Wie der Fachmann weiß, lassen sich thermoplastische Überzüge nur schlecht schleifen, die Reparaturfähigkeit ist daher ungenügend. In der Patentschrift wird explizit darauf verwiesen, daß nur lineare ungesättigte Polyole, wie beispielsweise ungesättigte Polyester zur Herstellung der Polyurethan-Dispersionen eingesetzt werden sollen. Um nun lineare ungesättigte Polyester zu erhalten, erfolgt die Synthese durch azeotrope Destillation. Die eingesetzten Schlepper haben Siedepunkte größer 100°C und lassen sich daher nur mit erheblichem Aufwand abdestillieren. Weiterhin wird in der CA-2 040 280 betont, daß zur Polyurethan-Präpolymerenherstellung auch keine tri- und höherfunktionellen gesättigten Polyole als Ausgangskomponenten einsetzbar sind, da die Umsetzung zum Polyurethan-Präpolymeren zur Vergelung führt.

Aufgabe war es, wäßrige Polyurethan-Dispersionen herzustellen, die nach Verdunsten des Wassers physikalisch trockene, klebfreie Beschichtungen ergeben, die anschließend aufgrund des Vorhandenseins ungesättigter Doppelbindungen, die nicht von Meth- oder Acryloylgruppen abstammen, zusätzlich radikalisch und/oder strahlenchemisch härtbar sind und die die vorher genannten Nachteile nicht aufweisen. Ziel war insbesonders vor der strahlenchemischen Härtung Beschichtungen zur Verfügung zu stellen, die mechanisch beanspruchbar sind und sehr gute Reparaturfähigkeit haben.

Überraschenderweise ließ sich die Aufgabenstellung durch Synthese der erfindungsgemäßen stark verzweigten Polyurethan-Dispersionen, die nachfolgend näher beschrieben werden, lösen.

Gegenstand der Erfindung sind Polyurethan-Dispersionen auf Basis verzweigter, allylisch ungesättigter Polyester, die z.B. dadurch gekennzeichnet sind, daß mindestens eine Hydroxylkomponente ein Triol ist. Die Herstellung der erfindungsgemäßen Polyurethan-Dispersionen erfolgt durch Polyaddition von
A. 20 bis 70 Gew.-%, vorzugsweise 25 bis 55 Gew.-%, eines oder mehrerer verzweigter, allylisch ungesättigter Polyester,
B. 1 bis 20 Gew.-%, vorzugsweise 2 bis 15 Gew.-%, einer oder mehrerer mono- und/oder difunktioneller, gegenüber Isocyanatgruppen reaktiven Verbindungen, die kationische oder anionische, dispergierend wirkende Gruppen tragen,
C. 5 bis 30 Gew.-%, vorzugsweise 7 bis 25 Gew.-%, eines oder mehrerer di- und/oder höherfunktioneller Alkohole und/oder gegebenenfalls deren alkoxylierten Derivate,
D. 20 bis 70 Gew.-%, vorzugsweise 25 bis 60 Gew.-%, eines oder mehrerer Polyisocyanate und
E. 0,1 bis 10 Gew.-%, vorzugsweise 0,5 bis 7 Gew.-%, Di- und/oder Polyamine, die auch in verkappter Form eingesetzt werden können.

Gegenstand der Erfindung ist außerdem die Verwendung der erfindungsgemäßen Polyurethan-Dispersionen als Lackbindemittel.

Bei den verzweigten, allylisch ungesättigten Polyestern A handelt es sich um Polykondensationsprodukte, die sich ableiten von
Polycarbonsäuren bzw., falls zugänglich, deren Anhydride (exemplarisch seien genannt Maleinsäureanhydrid, Fumarsäure oder Phthalsäure, besonders geeignet ist Maleinsäureanhyrid),
mindestens eine Hydroxylgruppe enthaltenden Allylether (wie z.B. Trimethylolpropan-mono-allylether, Trimethylolpropan-di-allylether oder Pentaerythrit-tri-allylether, insbesondere Trimethylolpropan-di-allylether),
ein oder mehrere zweiwertige Alkohole (wie z.B. Propylenglykol, Neopentylglykol, usw); es können auch Polyalkylenglykole eingesetzt werden, bevorzugt mit einer Molmasse von 400 bis 2000 g/mol,
gegebenenfalls ein oder mehrere einwertige Alkohole und
ein oder mehrere wenigstens dreiwertige Polyole (wie z.B. Trimethylolpropan, Pentaerythrit , usw).

Die Herstellung der verzweigten, allylisch ungesättigten Polyester erfolgt bevorzugt in der Schmelze in Gegenwart von Polymerisationsinhibitoren (vgl. z.B. DE 2 221 335, EP 451 588, EP 574 776).

Kationisch oder anionisch dispergierend wirkende Verbindungen B sind solche, die beispielsweise Sulfonium-, Ammonium-, Carboxylat- und/oder Sulfonatgruppen enthalten und durch das Vorhandensein von isocyanatreaktiven Gruppen in die Makromoleküle eingebaut werden. Bevorzugt geeignete, isocyanatreaktive Gruppen sind Hydroxyl- und Amingruppen. Vertreter für Verbindungen B sind Bis(hydroxymethyl)-propionsäure, Äpfelsäure, Glykolsäure, Milchsäure, Glycin, Alanin, Taurin und 2-Aminoethyl-aminoethansulfonsäure. Besonders geeignet ist Bis(hydroxymethyl)-propionsäure.

Ohne Anspruch auf Vollständigkeit können di- und höherfunktionelle Alkohole C sein z.B. Ethylenglykol, Polyethylenglykole, Propylenglykol, Polypropylenglykole, Neopentylglykol, Bis(hydroxymethyl)cyclohexan, Glycerin, Trimethylolethan, Trimethylolpropan, Pentaerythrit oder Di-pentaerythrit. Propylenglykol, Neopentylglykol und Trimethylolpropan oder Gemische dieser Alkohole C werden besonders bevorzugt.

Die Polyaddition kann mit aromatischen, araliphatischen, aliphatischen oder cycloaliphatischen Polyisocyanaten D erfolgen. Es können auch Mischungen solcher Polyisocyanate D eingesetzt werden. Beispiele geeigneter Polyisocyanate D sind Tetramethylendiisocyanat, Hexamethylendiisocyanat, 2,3,3 -Trimethyl hexamethylendiisocyanat, 1,4-Cyclohexylendiisocyanat, Isophorondiisocyanat, 1,4-Phenylendiisocyanat, 2,6-Toluylendiisocyanat, 1,5-Naphthylendiisocyanat, 2,4- oder 4,4'-Diphenylmethan-diisocyanat, Triphenylmethan-4,4',4"-triisocyanat sowie Polyisocyanate, die durch Trimerisation oder Oligomerisation von Diisocyanaten oder durch Reaktion von Diisocyanaten mit polyfunktionellen hydroxyl- oder amingruppenhaltigen Verbindungen entstehen. Hierzu gehört das Isocyanurat des Hexamethylendiisocyanats. Weiterhin geeignet sind blockierte, reversibel verkappte Polykisisocyanate wie 1,3,5-Tris-[6-(1-methyl-propyliden-aminoxycarbonylamino)-hexyl]-2,4,6-trioxo-hexahydro-1,3,5-triazin. Besonders bevorzugt sind Hexamethylendiisocyanat und Isophorondiisocyanat und deren Mischungen.

Di- und/oder Polyamine E dienen zum Erhöhen der Molmasse. Da diese Reaktion im wäßrigen Medium stattfindet, müssen die Di- und/oder Polyamine E reaktiver als Wasser gegenüber den Isocyanatgruppen sein. Exemplarisch seien genannt 1,2-Ethylendiamin, 1,6-Hexamethylendiamin, Isophorondiamin, 1,3-, 1,4-Phenylendiamin, 4,4'-Diphenylmethandiamin, Triethylentetramin und Hydrazin. Besonders bevorzugt sind 1,2-Ethylendiamin und Isophorondiamin. In einer ganz besonders bevorzugten Ausführung werden die Amine E in Form ihrer Aldimine, Ketimine, Azine oder Oxazolidine eingesetzt.

Zur Herstellung der erfindungsgemäßen Polyurethandispersionen können sämtliche, dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren bzw. Abkömmlinge davon, verwendet werden (vgl. "Methoden der Organischen Chemie", Houben-Weyl, 4. Auflage, Band E20/Teil 2, S. 1682, Georg Thieme Verlag, Stuttgart, 1987). Erfahrungsgemäß am besten geeignet ist das Aceton-Verfahren.

Die Komponenten A bis C werden zur Herstellung der Polyurethanoligomeren im Reaktor vorgelegt, mit einem mit Wasser mischbaren, aber gegenüber Isocyanat-gruppen inerten Lösungsmittel verdünnt und auf höhere Temperaturen, insbesondere im Bereich von 50 bis 120°C, aufgeheizt. Geeignete Lösungsmittel sind Aceton, Butanon, Tetrahydrofuran, Dioxan, Acetonitril und 1-Methyl-2-pyrrolidon, insbesondere Aceton und Butanon. Weiterhin können die zum Beschleunigen der Isocyanatadditionsreaktion bekannten Katalysatoren mit vorgelegt werden. Bekannte Katalysatoren hierfür sind Triethylamin, 1,4-Diazabicyclo-[2,2,2]-octan, Dibutylzinndioctoat oder Dibutylzinndilaurat. Zu dieser Mischung tropft man das und/oder die Polyisocyanate D. Das Verhältnis der Mole Hydroxylgruppen zu Mole Isocyanatgruppen liegt in der Regel zwischen 0,3 und 0,95, insbesondere zwischen 0,4 und 0,9.

Nach der Polyurethanoligomeren-Herstellung erfolgt, falls dies noch nicht im Ausgangsmolekül durchgeführt wurde, die Salzbildung der anionisch und/oder kationisch dispergierend wirkenden Zentren der Verbindungen B. Im Falle anionischer Zentren sind dazu Basen wie Ammoniak, Triethylamin, Triethanolamin, Kaliumhydroxid oder Natriumcarbonat und im Falle kationischer Zentren Schwefelsäuredimethylester oder Bernsteinsäure vorteilhaft einsetzbar.

Im letzten Reaktionsschritt, bei dem im wäßrigen Medium die Molmassenerhöhung und die Ausbildung der erfindungsgemäßen Polyurethan-Dispersion stattfindet, wird das und/oder die Polyamine E entweder in freier Form dem Dispergierwasser zugesetzt oder man gibt das und/oder die Polyamine E in verkappter Form zu den Lösungen der Polyurethanoligomeren und emulgiert anschließend mit Wasser, wobei die Polyamine E wieder freigesetzt werden. In beiden Fällen erfolgt dann die Molmassenerhöhung durch Reaktion von noch vorhandenen Isocyanat-gruppen der Polyurethanoligomeren mit den aminischen Wasserstoffen. Außerdem bilden sich die erfindungsgemäßen Emulsionen aus. Die eingesetzte Menge an Polyamin E hängt von den noch vorhandenen, nicht umgesetzten Isocyanatgruppen ab.

Falls erwünscht, kann das Lösungsmittel abdestilliert werden. Die Emulsionen haben dann einen Festkörpergehalt von 20 bis 60 Gew.-%, insbesondere 30 bis 55 Gew.-%.

Die erfindungsgemäßen Polyurethan-Dispersionen ergeben nach Verdunsten des Wassers bereits ohne Zugabe von Hilfsstoffen physikalisch trockene Lacküberzüge mit einer hohen mechanischen Beanspruchbarkeit. Durch anschließende strahlenchemisch und/oder radikalisch induzierte Vernetzung härten die Filme zu besonders hochwertigen, kratzfesten und chemikalienresistenten Lacküberzügen aus.

Bei der strahlenchemisch induzierten Polymerisation (UV-, Elektronen-, Röntgen- oder Gamma-Strahlen), die in Gegenwart von Fotoinitiatoren ausgelöst wird, ist die UV-Härtung besonders bevorzugt. Als Fotoinitiatoren eignen sich z.B. aromatische Ketonverbindungen, wie Benzophenone, Alkylbenzophenone, Michlers Keton, Anthron und halogenierte Benzophenone. Weiter geeignet sind z.B. 2,4,6-Trimethylbenzoyl-diphenylphosphonoxid, Phenylglyoxylsäureester, Anthrachinon und seine Derivate, Benzilketale und Hydroxyalkylphenone. Es können auch Gemische dieser Verbindungen eingesetzt werden.

Erfolgt die Härtung radikalisch, eignen sich wasserlösliche Peroxide oder wäßrige Emulsionen nicht wasserlöslicher Initiatoren. Diese Radikalbildner können in bekannter Weise mit Beschleunigern kombiniert werden.

Die erfindungsgemäßen Polyurethan-Dispersionen lassen sich durch Spritzen, Walzen, Rakeln, Gießen, Streichen oder Tauchen auf unterschiedlichste Substrate applizieren. Werden die erfindungsgemäßen Polyurethan-Dispersionen auf Holz appliziert, erhält man Oberflächen, die sich durch eine besonders anspruchsvolle Oberflächenoptik auszeichnen. Weiterhin können andere saugfähige Substrate wie Papier, Karton, Leder, u.a. aber auch Metalle und Kunststoffe, damit beschichtet werden.

Man kann die erfindungsgemäßen Polyurethandispersionen als alleiniges Lackbindemittel einsetzen oder mit den in der Lacktechnologie bekannten Bindemitteln, Hilfsstoffen und Additiven, wie beispielsweise Dispersionen, Pigmente, Farbstoffe oder Mattierungsmittel versetzen bzw. kombinieren.

### Beispiele

Die folgenden Beispiele sollen die Erfindung erläutern, ohne sie zu beschränken.

### Herstellung eines verzweigten, allylisch ungesättigten Polyesters A1

1 Mol Maleinsäureanhydrid, 0,6 Mol Trimethylolpropandiallylether, 0,04 Mol Trimethylolpropan, 0,4 Mol Benzylalkohol, 0,55 Mol 1,2-Propylenglykol und 0,03 Mol Polyethylenglykol 1500 werden bei 170°C in Gegenwart von 0,05 Gew.-% Toluhydrochinon einer Schmelzpolykondensation so lange unterworfen, bis die Säurezahl 20 mg KOH/g beträgt. Als OH-Zahl wurden 62 mg KOH/g bestimmt.

### Herstellung eines verzweigten, allylisch ungesättigten Polyesters A2

1 Mol Maleinsäureanhydrid, 0,6 Mol Trimethylolpropandiallylether, 0,04 Mol Pentaerythrit, 0,4 Mol Benzylalkohol, 0,55 Mol 1,2-Propylenglykol und 0,03 Mol Polyethylenglykol 1500 werden bei 170°C in Gegenwart von 0,05 Gew.-% Toluhydrochinon einer Schmelzpolykondensation so lange unterworfen, bis die Säurezahl 22 mg KOH/g beträgt. Als OH-Zahl wurden 68 mg KOH/g bestimmt.

### Herstellung eines verzweigten, allylisch ungesättigten Polyesters A3

1 Mol Maleinsäureanhydrid, 0,6 Mol Trimethylolpropandiallylelther, 0,04 Mol Trimethylolpropan, 0,4 Mol Benzylalkohol, 0,38 Mol Propylenglykol und 0,38 Mol 1,6-Hexandiol werden bei 170°C in Gegenwart von 0,05 Gew.-% Toluhydrochinon einer Schmelzpolykondensation so lange unterworfen, bis die Säurezahl 19 mg KOH/g beträgt. Als OH-Zahl wurden 64 mg KOH/g bestimmt.

### Herstellung der erfindungsgemäßen Polyurethan-Dispersionen

### Beispiel 1

Zu 100 g verzweigtem Polyester A1, 10 g Bis-(hydroxymethyl)-propionsäure, 30 g 1,2-Propylenglykol, 0,27 g Dibutylzinndilaurat und 161 g Butanon werden unter Rückflußerhitzen eine Mischung aus 51,7 g Hexamethylendiisocyanat und 68,4 g Isophorondiisocyanat zugegeben und 4 Stunden gerührt. Anschließend setzt man bei 65°C 7,5 g Triethylamin zu. Nach Abkühlen auf Raumtemperatur wird die Polyurethanoligomeren-Lösung unter starkem Rühren in 606 g Wasser, das 2,4 g Diethylamin enthält, gegeben. Es bildet sich dabei spontan eine Emulsion aus. Es wird so lange gerührt, bis IR-spektroskopisch kein Isocyanat bei 2270 Wellenzahlen mehr nachweisbar ist. Das Lösungsmittel wird mit einem Rotationsverdampfer unter Vakuum abgezogen.

Feststoffgehalt: 38,3 %; pH: 7; Auslaufzeit im DIN-4-Becher: 63 sek; MFT: <12°C.

### Beispiel 2

Wiederholung von Beispiel 1 mit der Änderung, daß 100 g verzweigter Polyester A2 und 100 g Aceton zur Herstellung des Polyurethanoligomeren eingesetzt werden. Anschließend setzt man bei 65°C 7,5 g Triethylamin zu. In diese Polyurethanoligomeren-Lösung gibt man eine Lösung aus 50 g Aceton und 5,4 g Ethylendiamin. Nach Abkühlen auf Raumtemperatur wird in die Polyurethanoligomeren-Lösung unter starkem Scheren 607 g Wasser eingerührt, wobei sich eine Emulsion ausbildet. Nach vollständiger Umsetzung der Isocyanatgruppen wird das Lösungsmittel im Vakuum abdestilliert.

Feststoffgehalt: 41,1 %; pH: 7,2; Auslaufzeit im DIN-4-Becher: 12 sek; MFT: <12°C.

### Beispiel 3

Zu 100 g verzeigtem Polyester A2, 5 g Bis-(hydroxymethyl)-propionsäure, 7,5 g Trimethylolpropan, 2,5 g 1,2-Propylenglykol, 0,29 g Dibutylzinndilaurat und 104 g Aceton werden unter Rückflußerhitzen eine Mischung aus 13 g Hexamethylendiisocyanat und 41,6 g Isophorondiisocyanat zugegeben und 4 Stunden gerührt. Anschließend setzt man bei 60°C 3,85 g Triethylamin zu. In diese Polyurethanoligomeren-Lösung gibt man eine Lösung aus 25 g Aceton und 9,4 g Isophorondiamin. Nach Abkühlen auf Raumtemperatur wird in die Polyurethanoligomeren-Lösung unter starkem Scheren 396 g Wasser eingerührt, wobei sich eine Emulsion ausbildet. Nach vollständiger Umsetzung der Isocyanat-Gruppen wird das Lösungsmittel im Vakuum abdestilliert.

Feststoffgehalt: 34 %; pH: 6,9; Auslaufzeit im DIN-4-Becher: 85 sek; MFT: <12°C.

### Beispiel 4

Zu 100 g verzweigtem Polyester A1, 10 g Bis-(hydroxymethyl)-propionsäure, 22,5 g 1,2-Propylenglykol, 8,8 g Trimethylolpropan, 0,31 g Dibutylzinndilaurat und 100 g Aceton werden unter Rückflußerhitzen eine Mischung aus 51,7 g Hexamethylendiisocyanat und 68,4 g Isophorondiisocyanat zugegeben und 4 Stunden gerührt. Anschließend setzt man bei 50°C 7,5 g Triethylamin zu. In diese Polyurethanoligomeren-Lösung gibt man eine Lösung aus 50 g Aceton und 2,4 g Ethylendiamin. Nach Abkühlen auf Raumtemperatur wird die Polyurethanoligomeren-Lösung unter starkem Rühren in 607 g Wasser gegeben, es bildet sich dabei spontan eine Emulsion aus. Das Lösungsmittel wird nach vollständiger Umsetzung der Isocyanatgruppen mit einem Rotationsverdampfer unter Vakuum abgezogen.

Feststoffgehalt: 40 %; pH: 7,3; Auslaufzeit im DIN-4-Becher: 37 sek; MFT: <12°C.

### Beispiel 5

Zu 100 g verzweigtem Polyester A1, 5 g Bis-(hydroxymethyl)-propionsäure, 7,5 g Trimethylolpropan, 7,5 g Neopentylglykol, 0,29 g Dibutylzinndilaurat und 117 g Aceton werden unter Rückflußerhitzen eine Mischung aus 15,3 g Hexamethylendiisocyanat und 47,2 g Isophorondiisocyanat zugegeben und 4 Stunden gerührt. Anschließend setzt man bei 60°C 3,85 g Triethylamin zu. In diese Polyurethanoligomeren-Lösung gibt man eine Lösung aus 25 g Aceton und 3,3 g Ethylendiamin. Nach Abkühlen auf Raumtemperatur wird in die Polyurethanoligomeren-Lösung unter starkem Scheren 409 g Wasser eingerührt, wobei sich eine Emulsion ausbildet. Nach vollständiger Umsetzung der Isocyanat-Gruppen wird das Lösungsmittel im Vakuum abdestilliert.

Feststoffgehalt: 36 %; pH 7; Auslaufzeit im DIN-4-Becher: 63 sek; MFT: <12°C.

### Beispiel 6

Wiederholung von Beispiel 1 mit der Änderung, daß 100 g verzweigter Polyester A3 und 100 g Aceton zur Herstellung des Polyurethanoligomeren eingesetzt werden. Anschließend setzt man bei 65°C 7,5 g Triethylamin zu. In diese Polyurethanoligomeren-Lösung gibt man eine Lösung aus 50 g Aceton und 2,4 g Ethylendiamin. Nach Abkühlen auf Raumtemperatur wird unter starkem Scheren 607 g Wasser eingerührt. Es bildet sich spontan eine Emulsion aus. Nach vollständiger Umsetzung der Isocyanatgruppen wird das Aceton im Vakuum abdestilliert.

Feststoffgehalt: 40,1 %; pH: 7,1; Auslaufzeit im DIN-4-Becher: 40 sek; MFT: < 12°C

### Anwendungstechnische Prüfung der erfindungsgemäßen Polyurethan-dispersionen (siehe Tabelle)

Die Dispersionen wurden in einer Schichtdicke von 90 pm auf Glasplatten aufgetragen, bei 25°C getrocknet und nach 1 Stunde die Pendelhärten nach König (DIN 53 157) bestimmt. In gleicher Weise wurden die Emulsionen, welchen jeweils 1,5 Gew.-% des Fotoinitiators 2-Hydroxy-2-methyl-1-phenyl-1-propanon zugesetzt waren, auf Glas aufgetragen, getrocknet (25°C) und mit UV-Licht bestrahlt (80 W/cm, 3 m/min und Lampe). 30 Minuten nach der UV-Härtung wurden die Pendelhärten nach König (DIN 53 157) bestimmt.

Zur Bestimmung der Oberflächenoptik wurden jeweils 150 g Dispersion mit 0,4 g Mattierungsmittel TS 100 (Fa. Degussa), 2,6 g Fotoinitiatormischung (2-Hydroxy-2-methyl-1-phenyl-1-propanon/Benzophenon 2:1) und Schwego PUR 8050 VP (Schwegmann) vermischt. Die Rezeptierungen wurden mit Wasser auf eine Auslaufzeit von 35 bis 40 sek DIN 4-Becher eingestellt und ca. 80 g/m² auf Esche gespritzt. Nach Verdunsten des Wassers bei 25°C wurde mit UV-Licht (80 W/cm, 1 m/min und Lampe) gehärtet und die Oberflächen geschliffen. Auf diese Oberflächen wurden nochmals die Formulierungen (Schichtdicke: ca. 80 g/m²) gespritzt, bei 25°C getrocknet und mit UV-Licht (80 W/cm, 1 m/min und Lampe) gehärtet. Das Verhalten auf der Holzoberfläche (Fülle), die Porenbenetzung und der Verlauf sind in der Tabelle zusammengestellt.

Zur Prüfung der Oberflächenbeständigkeit nach DIN 68 861 - 1A (die Tabelle enthält die Prüfergebnisse für Wasser, Ethanol und Aceton) wurden die Dispersionen mit jeweils 1,5 Gew.-% des Fotoinitiators 2-Hydroxy-2-methyl-1-phenyl-1-propanon versetzt und ohne weitere Verdünnung mit einem Kastenrakel in einer Schichtdicke von 120 µm auf Esche aufgetragen. Nach Verdunsten des Wassers bei 25°C wurde mit UV-Licht (80 W/cm, 1,5 m/min und Lampe) gehärtet und die Oberflächen geschliffen. Auf diese Oberflächen wurden nochmals die 1,5 Gew.-% Fotoinitiator enthaltenden Polyurethandispersionen mit einem Kastenrakel (Schichtdicke: 120 pm) aufgetragen (Kreuzaufzug), bei 25°C getrocknet und mit UV-Licht (80 W/cm, 1,5 m/min und Lampe) gehärtet.

**Tabelle**

| | Bsp. 1 | Bsp. 2 | Bsp. 3 | Bsp. 4 | Bsp. 5 | Bsp. 6 |
|---|---|---|---|---|---|---|
| Pendelhärte nach Wasserabgabe (DIN 53 157) | 77 sek. | 61 sek. | 40 sek. | 92 sek. | 48 sek. | 76 sek. |
| Pendelhärte nach UV-Härtung (DIN 53 157) | 159 sek. | 145 sek. | 155 sek. | 161 sek. | 157 sek. | 159 sek. |

| Chemikalienbeständigkeit*(DIN 68 861-1A) nach UV-Härtung gegenüber: | | | | | | |
|---|---|---|---|---|---|---|
| Wasser | 0 | 0 | 0 | 0 | 0 | 0 |
| Ethanol | 0 | 0 | 0 | 0 | 0 | 0 |
| Aceton | 0 | 0 | 0 | 0 | 0 | 0 |
| Schleiffbarkeit nach Wasserabgabe** | 1 | 1 | 2 | 1 | 2 | 1 |
| Aussehen der Oberflächen auf Esche | Die Lacküberzüge zeigen einen hervorragenden Verlauf mit sehr guter Fülle. Die Haftung und Härte ist ausgezeichnet. | | | | | |

| | | | | | | |
|---|---|---|---|---|---|---|
| *Einwirkdauer 16 Stunden, 0 = Ergebnishöchstwert | | | | | | |
| ** Beurteilung: 1 = sehr gut, feiner Schleifstaub, kein Zusetzen des Schleifpapiers 2 = gut, feiner Schleifstaub, geringes Zusetzen des Schleifpapiers 3 = ungenügend, Aufrollen des Schleifstaubs, starkes Zusetzen des Schleifpapiers 4 = schlecht, verklebt | | | | | | |

## Patentansprüche

1. Verfahren zur Herstellung von Polyurethan-Dispersionen auf Basis verzweigter, allylisch ungesättigter Polyester durch Polyaddition, dadurch gekennzeichnet, daß man
A. 20 bis 70 Gew.-%, vorzugsweise 25 bis 55 Gew.-%, eines oder mehrerer verzweigter, allylisch ungesättigter Polyester,
B. 1 bis 20 Gew.-%, vorzugsweise 2 bis 15 Gew.-%, einer oder mehrerer mono- und/oder difunktioneller, gegenüber Isocyanatgruppen reaktiven Verbindungen, die kationische oder anionische, dispergierend wirkende Gruppen tragen,
C. 5 bis 30 Gew.-%, vorzugsweise 7 bis 25 Gew.-%, eines oder mehrerer di- und/oder höherfunktioneller Alkohole und/oder gegebenenfalls deren alkoxylierten Derivate,
D. 20 bis 70 Gew.-%, vorzugsweise 25 bis 60 Gew.-%, eines oder mehrerer Polyisocyanate und
E. 0,1 bis 10 Gew.-%, vorzugsweise 0,5 bis 7 Gew.-%, Di- und/oder Polyamine, die auch in verkappter Form eingesetzt werden können,
umsetzt.

2. Verwendung der Polyurethan-Dispersionen hergestellt gemäß Anspruch 1, zur Herstellung von Lackbindemitteln.

## Claims

1. Process for the preparation of polyurethane dispersions based on branched, allylically unsaturated polyesters by polyaddition, characterised by reacting
A. 20 to 70 wt.%, preferably 25 to 55 wt.% of one or more branched, allylically unsaturated polyesters,
B. 1 to 20 wt.%, preferably 2 to 15 wt.% of one or more mono- and/or bifunctional compounds which are reactive towards isocyanate groups, bearing cationic or anionic groups with a dispersive action,
C. 5 to 30 wt.%, preferably 7 to 25 wt.% of one or more bifunctional and/or higher functionality alcohols and/or optionally alkoxylated derivatives thereof,
D. 20 to 70 wt.%, preferably 25 to 60 wt.% of one or more polyisocyanates, and
E. 0.1 to 10 wt.%, preferably 0.5 to 7 wt.% of di- and/or polyamines which may also be used in capped form.

2. Use of the polyurethane dispersions prepared according to claim 1 for the preparation of surface coating binders.

## Revendications

1. Procédé de préparation de dispersions de polyuréthannes à base de polyesters allyliquement insaturés, ramifiés, par polyaddition, caractérisé en ce que l'on fait réagir de :
A. 20 à 70% en poids, de préférence 25 à 55% en poids, d'un ou de plusieurs polyesters allyliquement insaturés, ramifiés ;
B. 1 à 20% en poids, de préférence 2 à 15% en poids, d'un ou de plusieurs composés réagissant avec les radicaux isocyanates, mono- et/ou bifonctionnels, qui portent des radicaux cationiques ou anioniques, agissant comme dispersant ;
C. 5 à 30% en poids, de préférence 7 à 25% en poids, d'un ou plusieurs alcools bi- et/ou polyfonctionnels et/ou facultativement, leurs dérivés alcoxylés ;
D. 20 à 70% en poids, de préférence 25 à 60% en poids, d'un ou de plusieurs polyisocyanates, et
E. 0,1 à 10% en poids, de préférence 0,5 à 7% en poids, de di- et/ou polyamines, qui peuvent également être sous forme masquée.

2. Utilisation des dispersions de polyuréthannes préparées suivant la revendication 1, pour préparer des liants pour vernis, laques ou peintures.
